# EUROPEAN PATENT SPECIFICATION

(11) **EP 1 768 067 B1**
(45) Date of publication and mention of the grant of the patent: **14.08.2013**
(21) Application number: 06120483.0
(22) Date of filing: 12.09.2006
(51) Int. Cl.: G06K 9/00

(54) **Electro-optical device for counting persons, or other, based on stereoscopic vision, and relative method**
Elektrooptische Vorrichtung zur Personenzählung oder anderen auf stereoskopischer Sicht basierenden Zählungen sowie entsprechendes Verfahren
Dispositif électro-optique pour compter des personnes ou autres, basé sur la vision stéréoscopique, et procédé correspondant

(30) Priority: 23.09.2005 IT UD20050152
(43) Date of publication of application: 28.03.2007
(73) Proprietor: ETH LAB SRL, 38057 Pergine Valsugana (TN) (IT)
(72) Inventor: Crespi, Bruno, 38049, Vattaro (TN) (IT); Sartori, Alvise, 38050, Povo (TN) (IT)
(74) Representative: Petraz, Gilberto Luigi

(56) References cited:
- WO-A-96/29826
- US-A- 5 581 625
- US-A1- 2003 133 707
- US-A1- 2005 093 697
- US-A1- 2005 111 705
- LIANG ZHAO ET AL: "Stereo- and neural network-based pedestrian detection" INTELLIGENT TRANSPORTATION SYSTEMS, 1999. PROCEEDINGS. 1999 IEEE/IEEJ/JSAI INTERNATIONAL CONFERENCE ON TOKYO, JAPAN 5-8 OCT. 1999, PISCATAWAY, NJ, USA,IEEE, US, 5 October 1999 (1999-10-05), pages 298-303, XP010369951 ISBN: 0-7803-4975-X
- BEYMER D: "Person counting using stereo" PROCEEDINGS WORKSHOP ON HUMAN MOTION, XX, XX, December 2000 (2000-12), pages 127-133, XP002335793
- TERADA K ET AL: "A method of counting the passing people by using the stereo images" IMAGE PROCESSING, 1999. ICIP 99. PROCEEDINGS. 1999 INTERNATIONAL CONFERENCE ON KOBE, JAPAN 24-28 OCT. 1999, PISCATAWAY, NJ, USA,IEEE, US, vol. 2, 24 October 1999 (1999-10-24), pages 338-342, XP010368984 ISBN: 0-7803-5467-2
- LIU X ET AL: "Detecting and counting people in surveillance applications" PROCEEDINGS. IEEE CONFERENCE ON ADVANCED VIDEO AND SIGNAL BASED SURVEILLANCE, 2005. COMO, ITALY SEPT. 15-16, 2005, PISCATAWAY, NJ, USA,IEEE, 15 September 2005 (2005-09-15), pages 306-311, XP010881193 ISBN: 0-7803-9385-6
- SER-NAM LIM ET AL: "Uncalibrated stereo rectification for automatic 3d surveillance" IMAGE PROCESSING, 2004. ICIP '04. 2004 INTERNATIONAL CONFERENCE ON SINGAPORE 24-27 OCT. 2004, PISCATAWAY, NJ, USA,IEEE, 24 October 2004 (2004-10-24), pages 1357-1360, XP010785455 ISBN: 0-7803-8554-3

## Description

### FIELD OF THE INVENTION

The present invention concerns an integrated electro-optical device for counting persons who pass through a gate, or stay in a delimited zone. The counting device according to the invention is suitable to reconstruct the three-dimensional profile of an area subjected to visual control by means of stereoscopic vision techniques. The counting of persons, or other moving forms, for example animals or objects, is obtained by separating objects from the background, discriminating the three-dimensional shape of the persons from the profiles generated by objects or structures, and by reconstructing the trajectory of the movement of the persons inside the detection zone. The invention is preferably applied in the field of public transport (buses, trains, subway) or the control of areas or buildings open to the public where it is necessary to count the number of persons present.

The invention also concerns the counting method carried out by the device.

### BACKGROUND OF THE INVENTION

Devices are known, for counting persons passing through a gate, which are normally made with photocells, pyroelectric sensors, ultrasounds, or combinations thereof. However, these devices have a considerable disadvantage: given the point nature of the detection, they do not allow to determine the shape of the object detected, and therefore to discriminate one object from another. Consequently, the performance and reliability of such systems are compromised in situations of crowding, where two or more persons in close contact enter and/or leave through a gate, or by the presence of bulky objects such as suitcases, rucksacks, trolleys, umbrellas, etc.

Moreover, systems consisting of multiple point sensors have considerable problems of gauging and pointing that determine a high cost of installation and maintenance.

Surveillance systems based on one or more TV cameras are also known. Systems based on the detection of movement alone suffer from errors caused by shadows or moving reflections, or by sudden changes in the light situation. Moreover, such systems are not able to detect the presence of static objects.

Recognition systems based on a 2D analysis of the images alone are not yet able to discriminate a given object from the background in typical real situations. This is because the variation in the possible two-dimensional forms resulting from different perspectives or positions of the object, particularly in the presence of several moving objects, makes it extremely complex to analyze the scene.

US-A-5,581,625 discloses a vision system based on stereoscopic analysis which is not able, however, to follow the movement of possible objects in the zone of interest.

US-A1-2004/0017929 discloses a stereoscopic vision system which is limited, however, to the detection of situations with fraudulent access to persons through a gate, such as tailgating or piggybacking. This system consists of various separate components of considerable size (one component to acquire images, an image acquisition card, an industrial PC, etc.) which must be connected to each other, which entails a considerable increase in bulk and complexity which greatly limits the applicability of the system in restricted spaces. Moreover, this system requires a minimum illumination for correct functioning and employs CCD optical sensors which can be dazzled by strong illumination.

WO-A2-2004/023782 discloses a stereoscopic system limited to controlling a door and based on a hardware architecture that is not integrated, but consists of different components, such as TV cameras, PC, Frame Grabbers, etc.

The article of Liang Zhao et al "Stereo- and Neural Network-Based Pedestrian Detection*"* discloses a real-time pedestrian detection system that uses a pair of moving cameras to detect both stationary and moving pedestrians in crowded environments, but it does not mention the possibility to count persons or objects with this system.

The articles of Beymer D. "Person counting using stereo*"* and of Terada K et al: "A method of counting the passing people by using the stereo images*"* do not mention the possibility of using neural networks in order to process the images detected by the stereo cameras.

US-A1-2005/093697 is referred to detecting and preventing access violations, such as piggybacking and tailgating. The detection of people is limited to the localization of peaks of topological profile of the disparity maps and the successive identification of those peaks with the heads.

Purpose of the present invention is to achieve an electro-optical device for counting persons, or other moving forms, which overcomes the limits and problems of devices currently available.

To be more exact, purpose of the invention is to achieve a counting device able to offer a high level of reliability and accuracy, which has limited size, is easy to install and configure, which does not require additional illumination or screening for outside lights, and which can be connected to external control systems by means of digital protocols.

The Applicant has devised, tested and embodied the present invention to obtain these and other purposes and advantages.

### SUMMARY OF THE INVENTION

The present invention is set forth and characterized in the respective main claims, while the dependent claims describe other innovative characteristics of the invention.

In accordance with these purposes, the electro-optical device counting device according to the present invention comprises at least the following components:
- a unit for acquiring synchronized stereoscopic images,
- a processing unit dedicated to processing the temporal flow of stereoscopic images,
- a unit to enable communication between the device and the outside, and
- an illumination unit.

These main components are suitably connected to each other and each has specific characteristics and functions.

According to a first characteristic of the invention, the image acquisition unit comprises at least an optical sensor, consisting of a matrix of photosensitive elements (pixels), able to convert the light radiation of the image detected into an electric signal. The image acquisition unit also comprises an optical system able to project onto two or more sensors, or onto different parts of the same sensor, the image of the same zone of space seen from at least two different perspectives, so as to be able to extract from the images the information on the three-dimensional profile of the objects present.

According to another characteristic of the invention, the processing unit is configured to perform the following operations: i) to rectify the stereoscopic images detected by the image acquisition unit, ii) to calculate distance maps starting from the pair of stereoscopic images, iii) to discriminate and count the persons present in the field of vision of the sensors, and possibly to verify their passage through determinate thresholds.

According to another characteristic of the invention, the illumination unit is configured so as to ensure a minimum illumination in the area of detection, so as to guarantee the correct functioning of the device in any condition whatsoever of external illumination.

According to another characteristic, in order to guarantee a correct functioning of the device even in the proximity of strong light sources, for example direct or reflected sunlight or powerful halogen lights, the image acquisition unit comprises one or more high-dynamic CMOS optical sensors with logarithmic response to incident light, which provide to convert the light radiation into an electric signal, preventing "blooming" effects.

According to the present invention, the device comprises a neural network, implemented in software mode or in hardware mode, able to classify the three-dimensional profiles obtained from the processing of the stereoscopic images. The use of the neural network allows to learn, from examples, the three-dimensional profiles corresponding to persons filmed from a determinate perspective and to discriminate these profiles from those of objects or other structures. The ability to recognize and classify three-dimensional forms allows to reduce errors in counting due to the simultaneous presence of persons and extraneous objects in the control zone.

In a first form of embodiment, the device according to the invention is implemented by means of the combination of discrete components, that is, the sensors, the processing unit and the unit connecting with the outside are independent parts mounted on cards and made to communicate with each other by means of suitable electric connections.

In an alternative form of embodiment, the different units that make up the system are integrated on a single silicon chip, that is, a System on Chip, by means of VLSI technology. This extreme integration technology allows to considerably reduce size, costs and consumption.

In order to further reduce costs and size, instead of two or more optical sensors equipped with lens, it is possible to acquire the stereoscopic images by means of an optical system configured to project different perspectives onto different portions of a single optical sensor of the CMOS type.

Even though so far the present invention has been described as a unit in itself, it is clear that various devices according to the invention can be interconnected through a line of digital communication so as to produce a network of sensors that cover several gates. In this way, the present invention can be employed to control the flow of persons through areas or buildings with different access gates.

In the same way, according to another evolution, the device according to the invention can be coupled with control devices of biometric security, such as devices that recognize faces, voices, fingerprints, and/or the iris.

Even though the present invention has been devised specifically for counting persons, it comes within the scope of the invention to provide the presence of a trainable recognition system which allows to configure the device to count different classes of objects.

### BRIEF DESCRIPTION OF THE DRAWINGS

These and other characteristics of the present invention will become apparent from the following description of two preferential forms of embodiment, given as a non-restrictive example with reference to the attached drawings wherein:
- figs. 1a-1b show, respectively in a front view and from above, a device according to the invention in an assembly position;
- fig. 2 shows a block diagram of the device according to the present invention in a first form of preferential embodiment;
- fig. 3 shows the flow chart describing the processing of the temporal sequence of the images for counting persons.

### DETAILED DESCRIPTION OF SOME PREFERENTIAL EMBODIMENTS OF THE INVENTION

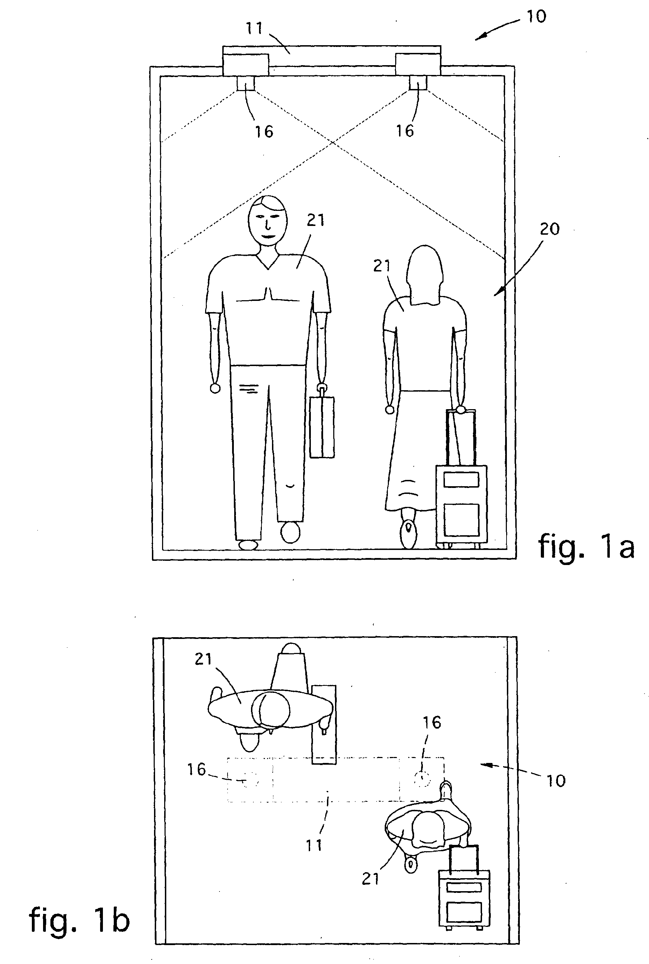

In fig. 1, the device 10 is shown mounted above a gate, indicated in its entirety with the reference number 20, so that the entry and exit movement of a person 21 passing through it is ideally perpendicular to the line joining the two optics and that the viewing plane is parallel to the floor. Preferably, the distance of the device 10 from the floor must be at least 240 cm in order to guarantee the accuracy of the counting.

In the configuration step for counting persons, the neural network of the device 10 is trained to recognize the three-dimensional form of a person seen from above.

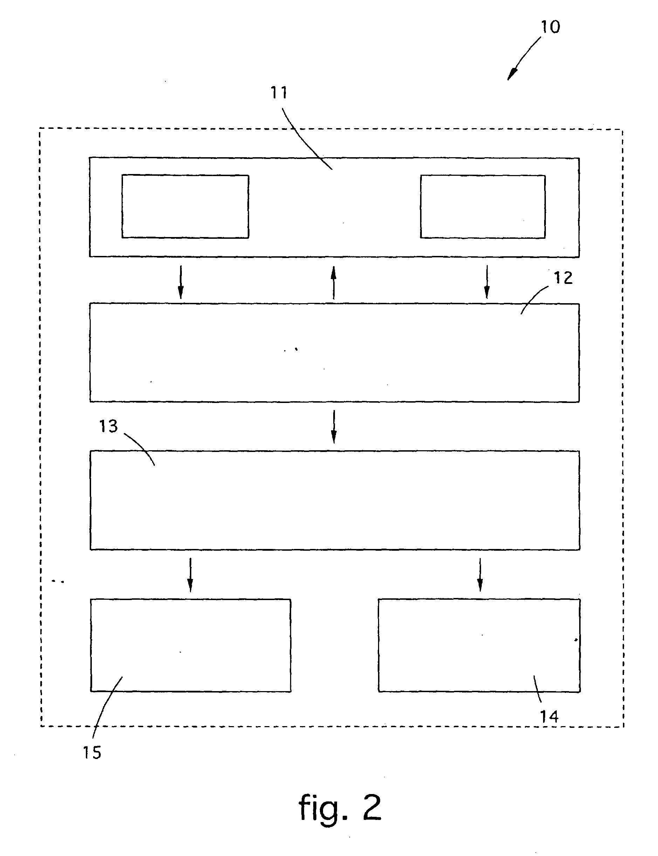

With reference to fig. 2, the device 10 according to the present invention comprises, as essential parts, an image acquisition unit 11, a parallel calculation unit 12 dedicated to the rectification of the images and to the calculation of the distance maps, a processing/calculation unit 13 to recognize the three-dimensional forms based on neural networks and to calculate the trajectory of the movement of the persons, an illumination unit 14, and a communication interface 15.

The image acquisition unit 11 is formed, in this case, by two CMOS high-dynamic optical sensors 16 inside the same frame, for example equal to 120 dB. Each optical sensor 16 consists of a matrix of 640x480 active logarithmic-response pixels which can be read individually in arbitrary sequence. The images are digitalized inside the optical sensor 16 by means of an analog-digital converter, advantageously of the 10 bit type. The adjustment parameters of the optical sensor 16 are controlled by a control mechanism that allows to optimize the quality of the images as the conditions of outside illumination vary.

The parallel calculation unit 12 is dedicated to the correction of the optical distortion, the rectification of the pair of stereoscopic images, the adjustment of the parameters of the optical sensor 16, and the calculation of the distance maps corresponding to the two stereoscopic images.

To be more exact, the correction of the optical distortion allows to obtain accurate results even in the presence of non-perfect optics, that is, subject to deformation.

The rectification of the pair of stereoscopic images allows to simplify the calculation of the distance and to improve the accuracy thereof, while the adjustment of the parameters of the optical sensors 16 stabilizes in real time the response of the optical sensor 16 to the variations in outside luminosity.

The calculation of the map of disparity from the stereoscopic images is actuated by means of an algorithm based on the correlation between the pair of stereoscopic images corrected, rectified and transformed by means of a filter that makes the calculation more robust with respect to illumination slopes.

In the preferential embodiment of the invention, the parallel calculation unit is of the FPGA type (Field Programmable Gate Array), and is equipped with a FLASH type memory in which are memorized the parameters necessary for the correction of the distortion and rectification. Using the FPGA allows to obtain calculation capacities much higher than those available using standard processors or DSP.

The processing unit 13 comprises a processor with a RAM or CPU type memory. The processing unit 13 is used for the high level, or cognitive, processing of the images and comprises: recognition of three-dimensional forms, identification of the trajectory of the movement thereof, counting, temporary memorization of the results and communication with the outside.

Using neural networks to identify the shape of a person in order to discriminate it from other objects is a characteristic of the invention. In fact, the great variability of possible poses of a human body with respect to the TV camera makes the recognition process very difficult to describe in mathematical and/or geometric terms. On the contrary, using neural techniques, it is enough to train the network with a sufficient number of typical examples, without having to have recourse to any specific algorithm.

The illumination unit 14 preferentially consists of a set of high luminosity LEDs with a wavelength in the portion of the visible spectrum or near infrared (from 400 nm to 1100nm), which provides a uniform illumination of the gate and ensures a correct and stable functioning of the device even in conditions of poor or zero illumination.

The communication unit 15 preferably consists of an Ethernet channel with 100Mbit/sec, a USB 2.0 channel, an RS232 serial and 4 opto-insulated ports for communication with industrial devices.

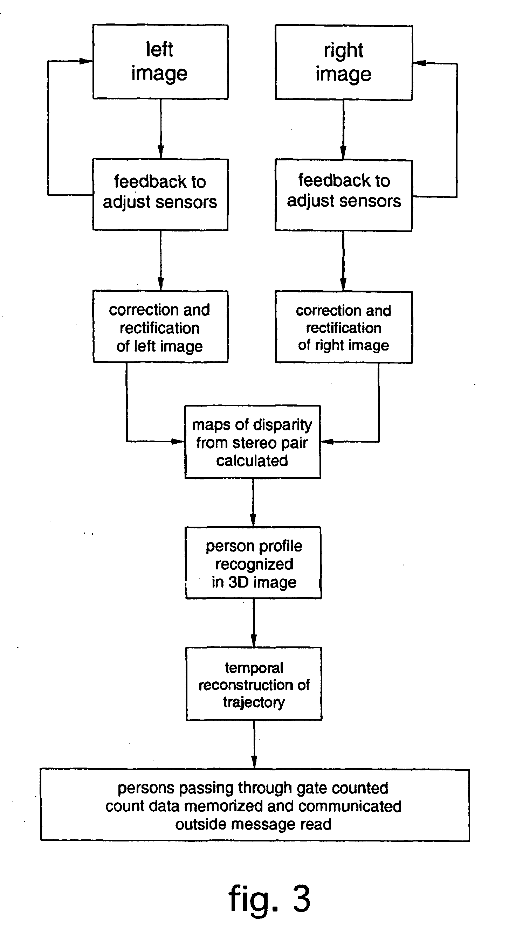

With reference to fig. 3, the device 10 according to the present invention comprises, as an integrating part, a program to achieve on the previously described electronic architecture the function of person counter. The flow chart of the program provides the following steps in the method:
- acquisition of the stereoscopic pair, that is, the left and right image, in synchrony mode;
- calculation of the average intensity of the images and adjustment of the parameters of the optical sensors 16 so as to obtain images with constant quality;
- software correction of the distortion of the optics of the lenses;
- rectification of the right and left images so that a pixel of one line of the right image can be found inside the same line on the left image;
- calculation of the map of differences and level of similarity from the corrected and rectified images;
- identification of the presence of shapes of persons by means of neural processing techniques;
- determination of the trajectories of the persons present in the zone of the gate, that is, the temporal evolution of the person's movement;
- counting the persons that pass through the gate;
- temporary memorization and communication of the results of the counting to the outside;
- reading of messages arriving from outside.

In an alternative preferential embodiment, the hardware architecture of the device 10 is integrated into a System on Chip, of the VISOC type (VIsion System on Chip, for example as described in EP-A-1.353.498 in the name of the Applicant). This microelectronic device consists of various blocks integrated on silicon, suitably connected with each other and each with a specific function. To be more exact, the device comprises:
- an optical sensor 16 with high-dynamics vision consisting of a matrix of photosensitive elements with active pixels, which provide to convert the luminous radiation into an electric signal, and of elements to select the desired photosensitive element in an arbitrary order;
- an analog-digital converter;
- a sequential microprocessor of the Von Neumann type;
- a parallel processor of the neural type;
- a volatile memory able to memorize data and programs in execution (RAM);
- a non-volatile memory able to memorize programs, adjustment and gauging parameters (FLASH);
- an interface to enable communication of the device with other external devices.

The CMOS optical sensor 16 of the electronic device is coupled with an optical system that projects, onto two complementary halves of the optical sensor 16, two images taken from different perspectives. The optical device can consist of prisms and/or mirrors and/or fiber optics. As an alternative to this optical system, a second CMOS optical sensor 16 is connected by means of a digital channel to the VISOC device.

The VISOC device is programmable using high-level languages, for example C/C++, Basic. In this case, the VISOC device is programmed following the flow of operations required to count the persons.

The VISOC device is coupled with a set of high-luminosity LEDs with wavelength in the portion of the visible spectrum or near infrared (from 400 nm to 1100 nm) which ensures a correct and stable functioning of the device even in conditions of poor or zero illumination.

Modifications and variants may be made to the device and method for counting persons based on stereoscopic vision as described heretofore, without departing from the scope of the present invention, as defined by the attached claims.

## Claims

1. Electro-optical device for counting persons, or other, comprising at least a unit for the acquisition (11) of synchronized stereoscopic images, said unit having a viewing plane parallel to the floor, and at least a processing unit (13), **characterized in that** it further comprises a parallel calculation unit (12) dedicated to the rectification of the stereoscopic images of the persons seen from above and to the calculation of the distance maps corresponding to said images detected by said acquisition unit (11), and **in that** said processing unit (13) comprises a neural network trained to recognize the three-dimensional profiles obtained from the processing of said stereoscopic images as performed by said calculation unit (12), said neural network being trained to learn the three-dimensional profiles corresponding to persons filmed from the above and to discriminate these profiles from those of objects or other structures, wherein the counting is obtained by identifying the presence of shapes of persons and determining the trajectories of the persons passing through the zone of a gate (20) in order to count the persons in the field of vision of said acquisition unit (11).

2. Device as in claim 1, **characterized in that** said acquisition unit (11) of stereoscopic images comprises at least an optical sensor (16) able to concert the luminous radiation of the image detected intro an electric signal, and an optical system able to project onto two or more optical sensors (16), or onto different parts of the same optical sensor (16), the image of the same zone of space seen from at least two different perspectives, so as to be able to extract from the images the information on the three-dimensional profile of the objects present.

3. Device as in claim 2, **characterized in that** said optical sensor (16) consists of a matrix of photosensitive elements.

4. Device as in claim 2, **characterized in that** said optical sensor (16) is of the type with a logarithmic response and with a wide dynamic range inside the same frame, that is, greater than 110 db.

5. Device as in claim 1, **characterized in that** said neural network is implemented in software mode.

6. Device as in claim 1, **characterized in that** said neural network is implemented in hardware mode.

7. Device as in claim 1, **characterized in that** it comprises an illumination unit (14) configured to ensure a minimum illumination in the area of detection in any condition whatsoever of external illumination.

8. Device as in claim 1, **characterized in that** it comprises at least a unit (15) suitable for communication between the device and the outside.

9. Device as in any claim hereinbefore, **characterized in that** said at least one optical sensor (16), said processing unit (13) and said external communication unit (15) are integrated on a single silicon support made using CMOS technology.

10. Device as in any claim hereinbefore, **characterized in that** it is interconnected with a plurality of devices of the same type so as to allow to control the flow of persons through a mating plurality of gates (20).

11. Device as in any claim hereinbefore, **characterized in that** it is able to be associated with means to recognize the person obtained by means of techniques for identifying the person's face and/or the person's voice.

12. Method for counting persons using the device as in any one of the previous claims, comprising at least a first step of acquisition of a three-dimensional image of objects present in an area of detection comprising at least a gate (20) by means of a stereoscopic vision of the same zone seen from the above and from at least two different perspectives and having a viewing plane parralel to the floor, **characterized in that** it further comprises a second step of rectification of the stereoscopic images detected and calculation of distance maps starting from the pair of stereoscopic images made by a parallel calculation unit (12), and a third step of discrimination and counting of the persons present in said area of detection, wherein said discrimination and counting step is performed by a neural network which receives said processed images from said unit (12), and wherein said discrimination and counting step provides to learn the three-dimensional profiles corresponding to persons filmed from the above and to discriminate these profiles from those of objects or other structures by identifying by means of said neural network the presence of shapes of persons and determining the trajectories of the persons passing through said gate (20) in order to count the persons in the field of vision of said acquisition unit (11).

## Patentansprüche

1. Elektrooptische Einrichtung zum Zählen von Personen oder Anderem, mit mindestens einer Einheit für die Aufnahme (11) synchronisierter stereoskopischer Bilder, wobei die Einheit eine Betrachtungsebene parallel zum Boden besitzt, und mit mindestens einer Verarbeitungseinheit (13), **dadurch gekennzeichnet, dass** die Einrichtung ferner eine Parallelrecheneinheit (12) umfasst, die für die Entzerrung der stereoskopischen Bilder der von oben gesehenen Personen und für die Berechnung der Entfernungskarten, die den von der Aufnahmeeinheit (11) erfassten Bildern entsprechen, vorgesehen ist, und **dadurch gekennzeichnet, dass** die Verarbeitungseinheit (13) ein neuronales Netzwerk umfasst, das so eingeübt ist, dass die 3-dimensionalen Profile erhalten werden, die aus der Verarbeitung der stereoskopischen Bilder erkannt werden, wie sie von der Recheneinheit (12) ausgeführt wird, wobei das neuronale Netzwerk eingeübt ist, um die 3-dimensionalen Profile, die Personen entsprechen, die von oben aufgenommen werden, einzulernen und diese Profile von jenen von Objekten oder anderen Strukturen zu unterscheiden, wobei das Zählen erreicht wird, indem die Anwesenheit von Formen von Personen erkannt und die Bewegungsbahnen der Personen, die durch die Zone eines Tores (20) durchgehen, bestimmt werden, um die Personen in dem Sichtfeld der Aufnahmeeinheit (11) zu zählen.

2. Einrichtung nach Anspruch 1, **dadurch gekennzeichnet, dass** die Aufnahmeeinheit (11) für stereoskopische Bilder mindestens einen optischen Sensor (16), der in der Lage ist, die Lichtstrahlung des erfassten Bildes in ein elektrisches Signal umzuwandeln, und ein optisches System umfasst, das in der Lage ist, das Bild der gleichen Raumzone, das von mindestens zwei unterschiedlichen Perspektiven betrachtet wird, auf zwei oder mehr optische Sensoren (16) oder auf unterschiedliche Teile des gleichen Sensors (16) zu projizieren, um in der Lage zu sein, aus den Bildern die Information über das 3-dimensionale Profil der vorhandenen Objekte zu extrahieren.

3. Einrichtung nach Anspruch 2, **dadurch gekennzeichnet, dass** der optische Sensor (16) aus einer Matrix aus fotoempfindlichen Elementen besteht.

4. Einrichtung nach Anspruch 2, **dadurch gekennzeichnet, dass** der optische Sensor (16) ein Sensortyp mit einem logarithmischen Ansprechverhalten und mit einem weiten dynamischen Bereich innerhalb des gleichen Bildes, d.h. größer als 110 dB ist.

5. Einrichtung nach Anspruch 1, **dadurch gekennzeichnet, dass** das neuronale Netzwerk in einem Software-Modus eingerichtet ist.

6. Einrichtung nach Anspruch 1, **dadurch gekennzeichnet, dass** das neuronale Netzwerk als Hardware eingerichtet ist.

7. Einrichtung nach Anspruch 1, **dadurch gekennzeichnet, dass** sie eine Beleuchtungseinheit (14) umfasst, die ausgebildet ist, eine minimale Beleuchtung in dem Erfassungsbereich unter beliebigen Bedingungen für die externe Beleuchtung sicherzustellen.

8. Einrichtung nach Anspruch 1, **dadurch gekennzeichnet, dass** sie mindestens eine Einheit (15) umfasst, die für eine Kommunikation zwischen der Einrichtung und der Außenwelt geeignet ist.

9. Einrichtung nach einem vorhergehenden Anspruch, **dadurch gekennzeichnet, dass** der mindestens eine optische Sensor (16), die Verarbeitungseinheit (13) und die externe Kommunikationseinheit (15) in einem einzelnen Siliziumträger integriert sind, der unter Anwendung einer CMOS-Verfahrenstechnik hergestellt ist.

10. Einrichtung nach einem vorhergehenden Anspruch, **dadurch gekennzeichnet, dass** sie mit mehreren Einrichtungen der gleichen Art verbunden ist, um eine Kontrolle eines Personenstroms durch mehrere Gegentore (20) zu ermöglichen.

11. Einrichtung nach einem vorhergehenden Anspruch, **dadurch gekennzeichnet, dass** sie in der Lage ist, mit einem Mittel verbunden zu werden, so dass die Person, die mittels Techniken zum Erkennen des Gesichts der Person und/oder der Stimme der Person ermittelt wird, erkannt wird.

12. Verfahren zum Zählen von Personen unter Anwendung der Einrichtung nach einen der vorhergehenden Ansprüche, mit mindestens einem ersten Schritt zum Aufnehmen eines 3-dimensionalen Bildes von Objekten, die in einem Erfassungsbereich vorhanden sind, der mindestens ein Tor (20) enthält, mittels einer stereoskopischen Ansicht der gleichen Zone, die von oben und von mindestens zwei unterschiedlichen Perspektiven gesehen wird und eine Betrachtungsebene parallel zum Boden aufweist, **dadurch gekennzeichnet, dass** das Verfahren ferner einen zweiten Schritt zur Entzerrung der erfassten stereoskopischen Bilder und der Berechnung von Entfernungskarten beginnend von dem Paar an stereoskopischen Bildern, die von einer Parallelrecheneinheit (12) erstellt wurden, umfasst, und einen dritten Schritt der Unterscheidung und des Zählens der in dem Erfassungsbereich vorhandenen Personen umfasst, wobei der Schritt des Unterscheidens und des Zählens durch ein neuronales Netzwerk ausgeführt wird, das die verarbeiteten Bilder von der Einheit (12) empfängt, und wobei der Schritt des Unterscheidens und des Zählens dazu führt, dass die 3-dimensionalen Profile, die den von oben aufgenommenen Personen entsprechen, eingelernt werden und diese Profile von jenen von Objekten oder anderen Strukturen unterschieden werden, indem mittels des neuronalen Netzwerks die Anwesenheit von Formen von Personen erkannt und die Bewegungsbahnen der Personen, die durch das Tor (20) gehen, bestimmt werden, um die Personen in dem Betrachtungsfeld der Aufnahmeeinheit (11) zu zählen.

## Revendications

1. Dispositif électro-optique pour compter des personnes ou autres, comprenant au moins une unité d'acquisition (11) d'images stéréoscopiques synchronisées, le plan d'observation de ladite unité étant parallèle au sol, et au moins une unité de traitement (13), **caractérisé en ce qu'**il comprend en outre une unité de calcul parallèle (12) dédiée à la rectification des images stéréoscopiques des personnes vues du dessus et au calcul des cartes de distances correspondant auxdites images détectées par ladite unité d'acquisition (11), et **en ce que** ladite unité de traitement (13) comprend un réseau neuronal ayant appris à reconnaître les profils tridimensionnels obtenus par le traitement desdites images stéréoscopiques effectué par ladite unité de calcul (12), ledit réseau neuronal ayant appris à retenir les profils tridimensionnels correspondant aux personnes filmées du dessus, et à différencier ces profils de ceux d'objets ou d'autres structures, dispositif dans lequel le comptage est obtenu en identifiant la présence de formes de personnes et en déterminant la trajectoire des personnes qui traversent la zone d'un portique (20) afin de compter les personnes présentes dans le champ de vision de ladite unité d'acquisition (11).

2. Dispositif selon la revendication 1, **caractérisé en ce que** ladite unité d'acquisition (11) d'images stéréoscopiques comprend au moins un capteur optique (16) pouvant convertir le rayonnement lumineux de l'image détectée en signal électrique, et un système optique pouvant projeter sur deux capteurs optiques (16) ou plus, ou sur différentes parties du même capteur optique (16), l'image de la même zone d'espace vue sous au moins deux perspectives différentes, de manière à pouvoir extraire de ces images les informations relatives au profil tridimensionnel des objets présents.

3. Dispositif selon la revendication 2, **caractérisé en ce que** ledit capteur optique (16) est constitué d'une matrice d'éléments photosensibles.

4. Dispositif selon la revendication 2, **caractérisé en ce que** ledit capteur optique (16) est du type à réponse logarithmique et doté d'une large plage dynamique à l'intérieur du même cadre, c'est-à-dire supérieure à 110 dB.

5. Dispositif selon la revendication 1, **caractérisé en ce que** l'implémentation dudit réseau neuronal est logicielle.

6. Dispositif selon la revendication 1, **caractérisé en ce que** l'implémentation dudit réseau neuronal est matérielle.

7. Dispositif selon la revendication 1, **caractérisé en ce qu'**il comprend une unité d'éclairage (14) conçue pour assurer un éclairage minimal dans la zone de détection, quelles que soient les conditions d'éclairage extérieur.

8. Dispositif selon la revendication 1, **caractérisé en ce qu'**il comprend au moins une unité (15) appropriée à la communication entre le dispositif et l'extérieur.

9. Dispositif selon l'une quelconque des revendications précédentes, **caractérisé en ce que** ledit au moins au moins un capteur optique (16), ladite unité de traitement (13) et ladite unité de communication externe (15) sont intégrées a un unique support en silicium fabriqué par technique CMOS.

10. Dispositif selon l'une quelconque des revendications précédentes, **caractérisé en ce qu'**il s'interconnecte à une pluralité de dispositifs du même type pour permettre de contrôler le flux de personnes traversant une pluralité de portiques (20) homologues.

11. Dispositif selon l'une quelconque des revendications précédentes, **caractérisé en ce qu'**il peut être associé à des moyens de reconnaissance de la personne opérant par des techniques d'identification de son visage et/ou de sa voix.

12. Procédé de comptage de personnes utilisant le dispositif selon l'une quelconque des revendications précédentes, comprenant au moins une première étape d'acquisition d'une image tridimensionnelle d'objets présents dans une aire de détection comprenant au moins un portique (20), par vision stéréoscopique de la même zone vue du dessus et sous au moins deux perspectives différentes, et dont le plan d'observation est parallèle au sol, **caractérisé en ce qu'**il comprend en outre une seconde étape de rectification des images stéréoscopiques détectées et de calcul des cartes de distances partant des deux images stéréoscopiques et effectué par une unité de calcul parallèle (12), et une troisième étape de différenciation et de comptage des personnes présentes dans ladite aire de détection, procédé dans lequel ladite étape de différenciation et de comptage est réalisée par un réseau neuronal qui reçoit de ladite unité (12) lesdites images traitées, et dans lequel ladite étape de différenciation et de comptage prévoit d'apprendre les profils tridimensionnels correspondant aux personnes filmées du dessus et de différencier ces profils de ceux d'objets ou d'autres structures en identifiant, à l'aide dudit réseau neuronal, la présence de formes de personnes et en déterminant la trajectoire des personnes qui traversent ledit portique (20) afin de compter les personnes présentes dans le champ de vision de ladite unité d'acquisition (11).
